# EUROPEAN PATENT SPECIFICATION

(11) **EP 1 891 461 B1**
(45) Date of publication and mention of the grant of the patent: **28.05.2014**
(21) Application number: 05782717.2
(22) Date of filing: 02.08.2005
(51) Int. Cl.: G01S 7/521, G01S 15/89, G01S 15/96, H04R 1/44

(54) **SONAR IMAGING SYSTEM FOR MOUNTING TO WATERCRAFT**
SONAR-BILDGEBUNGSSYSTEM ZUR ANBRINGUNG AN WASSERFAHRZEUGEN
SYSTEME D'IMAGERIE SONAR A MONTER SUR UN BATEAU

(30) Priority: 02.08.2004 US 598326 P
(43) Date of publication of application: 27.02.2008
(73) Proprietor: Johnson Outdoors, Inc., Racine WI 53403 (US)
(72) Inventor: BETTS, David, A., Eufaula, GA 36027 (US); DERROW, Robert, W., Eufaula, GA 36027 (US); HOWELLS, David, J., Atlanta, GA 30350 (US)
(74) Representative: Elsworth, Dominic Stephen
(86) International application number: PCT/US2005/027436
(87) International publication number: WO 2006/017511

(56) References cited:
- US-A- 3 484 737
- US-A- 3 585 578
- US-A- 4 075 599
- US-A- 4 207 620
- US-A- 4 216 537
- US-A- 4 216 537
- US-A- 4 879 697
- US-A- 4 879 697
- US-A- 4 970 700
- US-A- 5 184 330
- US-A- 5 390 152
- US-A- 6 084 827
- US-A1- 2001 026 499
- US-B1- 6 449 215

## Description

### FIELD OF THE INVENTION

The present invention relates generally to sonar imaging systems for use in sport fishing applications such as in a fish finder, sonar depth sounder, etc., and more particularly to side scan sonar imaging systems for imaging of the underwater environment to the sides of the watercraft rather than just below the watercraft.

### BACKGROUND OF THE INVENTION

Sonar devices that transmit sound waves have been used previously to obtain information about underwater articles, including fish, structures and obstructions, and the bottom. The sound waves travel from a transducer mounted to a bottom surface of the vessel through the water. The sound wave transmits from the sonar devices in diverging patterns. The sound waves contact underwater articles, which create return echoes. The transducer receives the return echoes and the sonar device analyzes the received echoes. A display device displays representations of the received echoes, for locating fish and other underwater articles.

Known side scan sonar devices locate the transducer in a vessel towed by the watercraft (e.g., a "tow fish"). The tow fish is coupled to the sonar display by a long cable. The length of the cable will depend on the depth of the water and other conditions. For typical applications, the length of the cable is 50 feet or more. Moreover, it is not uncommon for the cable to be hundreds or even thousands of feet long. As can be appreciated by some having ordinary skill in the art, a fisherman or recreation user desiring to have side scan images would be hindered by such an arrangement. For example, maneuvering or turning of the watercraft in different directions is difficult, as well as tangling of the sonar cable with fishing or other recreational equipment. Such known tow fish transducers are maintained at a consistent distance from the bottom of the body of water. This distance is intended to provide desired or optimized resolution and field of view. A consistent distance inhibits, if not prohibits, modifying known transducers for side scan applications (or mounting known side scan transducers to watercraft) because the distance between the transducer to the bottom of the water will vary as the watercraft travels due the varying depth of the water.

US 4879697 describes a sonar fish finder system for a fishing boat which includes an electromechanical transducer assembly for transmitting conically shaped sound beams to the left, right and under sides of the boat. The system provides simplified scanning and produces an easy to use display which enables a fisherman to determine whether objects are present or absent to the left or right of the boat or directly underneath.

US 3585578 describes a sonar apparatus carried by a propelled or towed vehicle. The apparatus includes elongated side scanning transducers.

US 2001/026499 describes an ultrasonic underwater detection apparatus which is capable of operating on a wide range of transducer frequencies.

US 4216537 describes an echosounding device submerged in water and towed behind a ship. The device comprises transducer means for transmitting and receiving acoustic waves at two different frequencies.

US 6449215 is directed to a three-dimensional sonar imaging system that process forward-looking sonar data, side-looking sonar data, vehicle position and navigation data and renders a three-dimensional image of an ensonified region.

US 5184330 is directed to a sonar depth sounder system which includes acoustic absorbers positioned in association with the individual acoustic elements.

US 6084827 is directed to an apparatus for tracking the position in three dimensions of one or more objects underwater. The apparatus may include a GPS receiver.

US 3484737 describes an apparatus for mapping an area from a platform moving relative to the area comprising a transmitter for acoustically illuminating the area with a modulated beam having a width in both the track and cross-track platform direction.

Accordingly, it would be advantageous to provide a sonar imaging system that is coupled to the watercraft, rather than being coupled by a flexible cable and towed behind the watercraft.

It would also be advantageous to provide sonar imaging system mountable to a motor (such as a trolling motor), a transom of the watercraft, or to the hull of the watercraft. It would also be advantageous to provide sonar imaging system operable at multiple resonant frequencies for optimized performance at varying bottom depths. It would be desirable to provide for a sonar imaging system for mounting to a watercraft having one or more of these or other advantageous features.

### BRIEF SUMMARY OF THE INVENTION

In view of the above, it is an objective of the present invention to provide a new and improved sonar imaging system that is capable of being connected to a watercraft, such as a fishing boat. It is a further objective to provide a new and improved sonar imaging system that provides imaging of the underwater environment to the sides of the watercraft. It is a still further object of the invention to provide a new and improved sonar imaging system that additionally provides imaging of the underwater environment below the watercraft.

In accordance with these objectives, an embodiment of the present invention provides a sonar imaging device comprising a transducer assembly comprising a housing having mounting members adapted to mount the transducer assembly to a watercraft or a trolling motor, left and right side scan acoustic elements positioned within the housing to provide side scan sonar imaging wherein the left and right side scan acoustic elements are each rectangular in shape having a total length of between about 7.62 centimetres (three inches) to about 17.78 centimetres (seven inches) and a total width of between about 0.32 centimetres (0.125 inches) and about 1.27 centimetres (0.5 inches) to produce fan-shaped beams having a narrow horizontal angle and a wide vertical angle, and at least one downward scan acoustic element positioned in the housing between the left and right side scan acoustic elements to provide downward scan sonar imaging.

Preferably the system includes an electronic control head unit coupled to the transducer that is configured to display sonar images. In one embodiment of the present invention, the sonar imaging system includes circular downward scan acoustic elements. The present invention further relates to a software filter configured to remove noise generated by a spark plug or other operation of a motor for the watercraft.

The system of the present invention realizes several advantages over the traditional towfish side scan sonar systems. It is more convenient because there are no deployment requirements of getting the transducer towfish into the water, no cable handling hassles and tangles, no precise speed control requirements to keep the towfish at the right depth and prevent it from hitting the bottom, no complicated large diameter turn requirements to prevent the towfish from hitting the bottom when you want to turn the boat, and no worries about getting the lines and cable tangled when fishing. The system of the present invention can even used for imaging by a watercraft in reverse.

The system of the present invention is also more secure than the traditional side scan sonar systems. There is no chance of snagging the towfish or loss of transducer. Most fishing is done near bottom rises, drop-offs and underwater structures. Most natural and especially man-made lakes have rocks, stumps and standing timber that can snag a towfish and cause damage or loss of the equipment.

Additionally, the system of the present invention provides more area of coverage. The watercraft mounted transducer of the present invention does not limit the turning radius of the vessel, and it provides the ability to image closer to the shore and near structure. This allows for faster and more complete imaging. The system also provides more accurate target locations. Having the transducer mounted to the watercraft allows for precise target locations. With a towed side scan system the crew has to take into account how much cable is deployed and how deep the towfish is to determine how far back behind the boat the target is. With the watercraft mounted system of the present invention, this is not a factor. To provide even more accurate images, the system of the present invention provides the offset necessary to account for the X and Y distance between the side imaging transducer and the GPS antenna. The system of the present invention also has a better aspect at some targets because, in some cases, the view from the surface can "see" better over rises and into holes than the towed side scan sonar at a fixed distance from the bottom. The system of the present invention can also be mounted to smaller watercraft such as canoes, kayaks and other personal watercraft.

In a preferred embodiment of the present invention, the system includes features to correct for watercraft mounted nature of the transducers. Unlike using a towfish in which data collection takes place at a fixed distance from the bottom (same aspect angle at any depth of water), and in which the towfish dynamics are decoupled from vessel motion in rough seas, the system of the present invention compensates for these differences. In a preferred embodiment of the present invention, the depression angle of the side imaging elements is increased from about 20 degrees to about 30 degrees. This provides better coverage at the greater aspects. Also in a preferred embodiment, the side elements are designed to be dual frequency to provide a trade-off between area of coverage and resolution. Transducer element shielding and software filters are also provided in a preferred embodiment to eliminate vessel noise sources such as spark plug and electrical system EMI (solenoids, VHF radios, electric motors, etc.). In one embodiment of the present invention, the system includes passive yaw, tilt transducer minimization or compensation using floating oil bath self leveling. In another embodiment the system includes active yaw, tilt transducer minimization or compensation via tilt sensors and motors.

Additional features over traditional side scan provided by embodiments of the present invention include fish identification and alarm in side beams. Typical side scan systems consider fish as unwanted noise. Screen capture and playback functioning like a digital camera with the ability to store an image, review already stored images, erase unwanted images, and download images to a computer are also provided in embodiments of the present invention. Unlike typically data recording when a user sees an image on the screen they can simply push a capture button, instead of having to start recording before the user sees the target. Preferred embodiments also provide zoom capability that allows a user to view only the right or left side at a time and also zoom into a particular area either using the cursor or a touch screen. Further, the ability to use standard image enhancement software (algorithms) either in the unit or post processed is provided to allow for color, contrast, brightness, auto fix, edge detect, etc.

In a preferred embodiment of the present invention, a down beam is provided along with the side imaging. This provides for more complete around the boat information (both sides and straight down). It is not limited to a single beam. One embodiment utilizes a 200kHz/50kHz dual beam. Other embodiments may use a quad beam or even six beam. In preferred embodiments, at least one view shows both down beam and side imaging. This provides the ability to better relate length of shadow information to the size of the underwater target. It also provides for a quick means for verification of target location. After a target is located off to a side, the boat can be driven directly over the target and located in the down beam for precise location.

In a still further preferred embodiment, GPS imaging is also provided with the side imaging. In such embodiments a cursor mode allows a user to move the cursor over a target of interest on the screen image and set a waypoint for the location of the structure. The GPS history may be used to determine the distance back and the sonar may be used to determine the distance to the side. The GPS speed can be used to provide the screen scroll rate to provide more accurate front to back target dimensions. Without GPS or a speed sensor a fast scroll rate and a slow boat speed will elongate targets and a slow scroll rate and a fast boat speed will shorten targets. The corners of screen captures can be marked so that large area composite mosaic images can be generated in the unit or post processed later. Preferably, one view that shows both side imaging and navigation information is provided. This makes it easier to follow tracks and provide efficient area coverage.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is an isometric illustration of one embodiment of a fishing vessel mounted sonar imaging system of the present invention;
FIG. 2 is an exploded bottom view isometric illustration of an embodiment of a transducer module constructed in accordance with the teachings of the present invention;
FIG. 3 is a side view illustration of the assembled transducer module of FIG. 2;
FIG. 4 is an end section view of the assembled transducer module of FIG. 3 taken about section line 4-4;
FIG. 5 is a partial section view of the housing joint of the assembled transducer module of FIG. 4 taken at section A;
FIG. 6 is a fully exploded bottom view isometric illustration to the transducer module of FIG. 2;
FIG. 7 is a partial exploded view isometric illustration of a top housing assembly showing placement of downward looking sonar elements;
FIG. 8 is a partial exploded view isometric illustration of a top housing assembly showing placement of downward looking sonar elements and side scan sonar elements;
FIG. 9 is an exploded isometric illustration of an embodiment of a downward looking sonar element suitable for application in the sonar imaging system of the present invention;
FIG. 10 is an exploded isometric illustration of an embodiment of a side scan sonar element suitable for application in the sonar imaging system of the present invention;
FIG. 11 is an isometric illustration of one embodiment of a cable attachment for the sonar imaging system of the present invention; and
FIG. 12 is a simplified system block diagram of an embodiment of the sonar imaging system of the present invention.

### DETAILED DESCRIPTION OF THE INVENTION

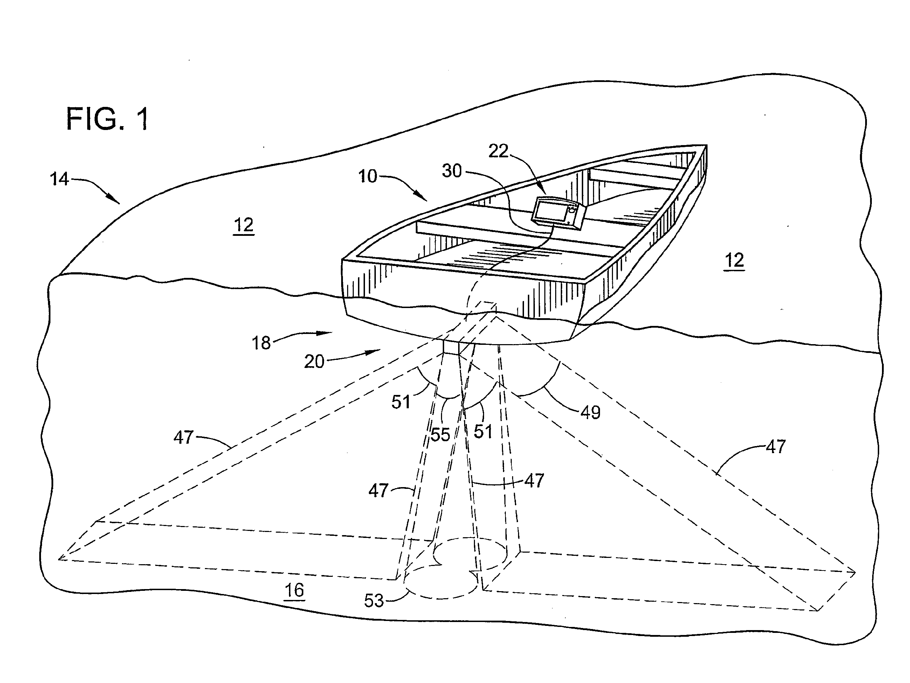

Turning now to the drawings, FIG. 1 illustrates a vessel (shown as a watercraft 10) on a surface 12 of a body of water 14 having a bottom 16. A sonar imaging system 18 is mounted or coupled to the watercraft 10 (e.g., rather than being towed by a flexible cable behind the watercraft 10) and is configured to scan the water below and to the sides of the watercraft (i.e., a boat mounted side scan sonar system). The sonar imaging system 18 comprises a transponder or transducer 20 coupled to an electronic control head unit 22 located at the watercraft 10. The sonar imaging system 18 repetitively scans the body of water 14 for fish and other underwater articles with transmissions of acoustic waves and receiving and displaying the sonar returns, with the duration of receiving being a function of the determined depth from a prior transmission.

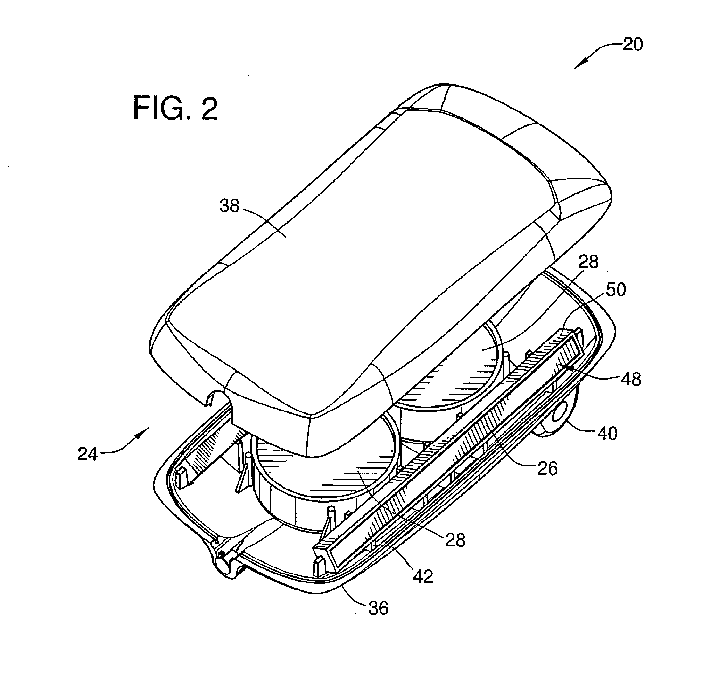

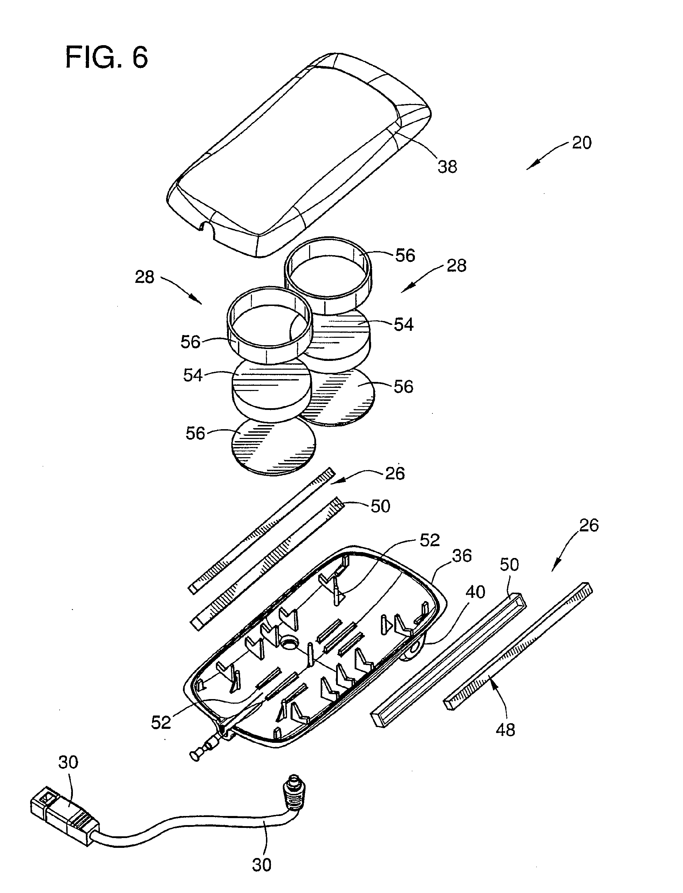

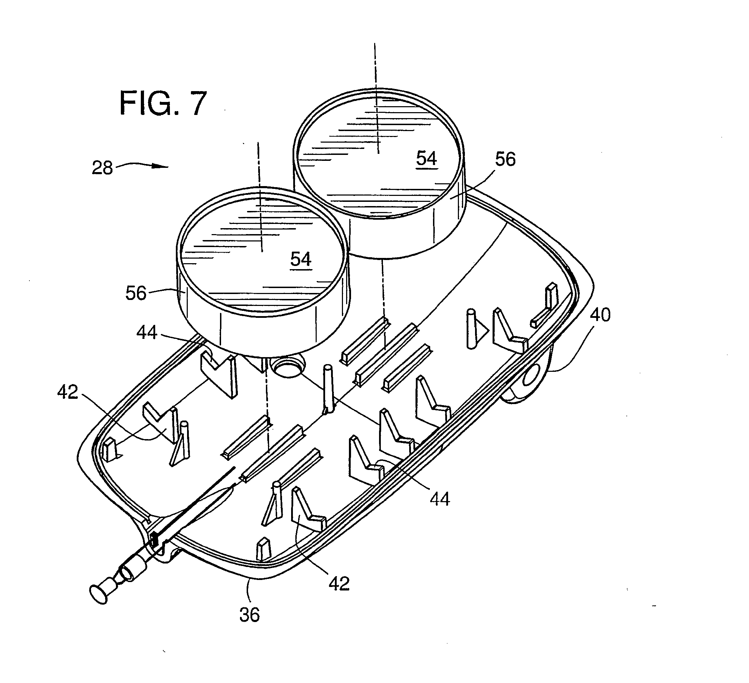

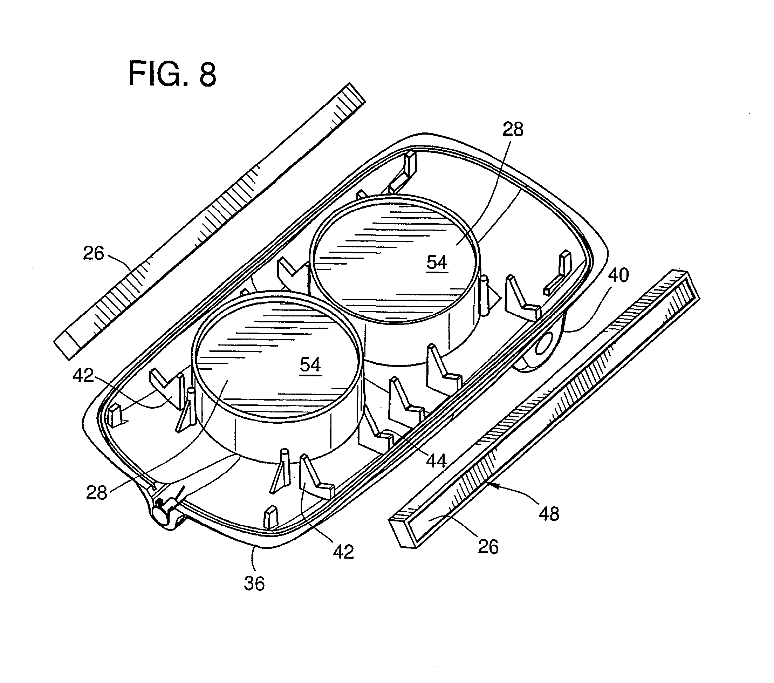

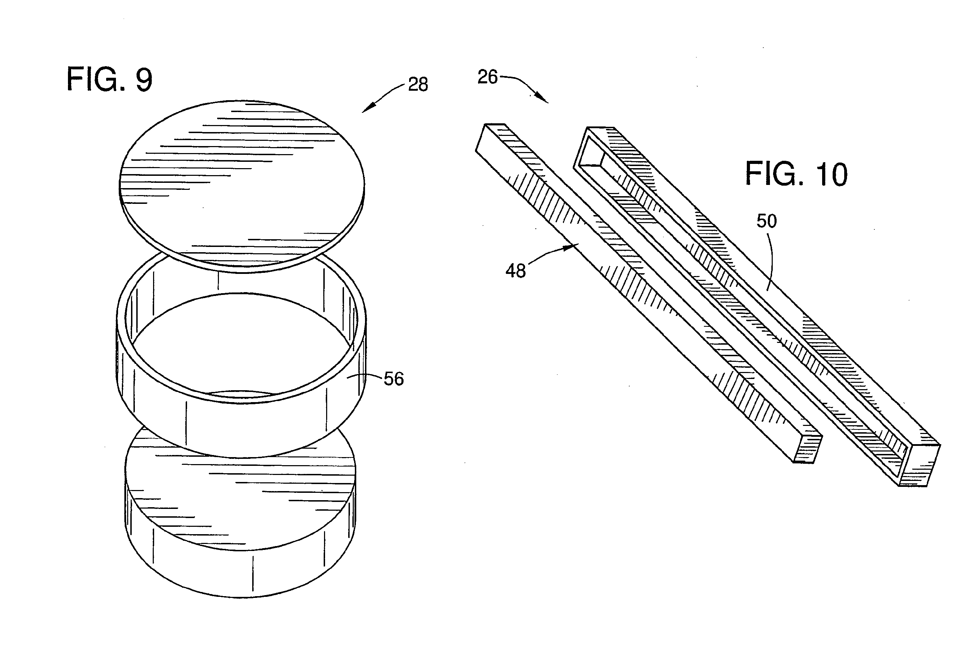

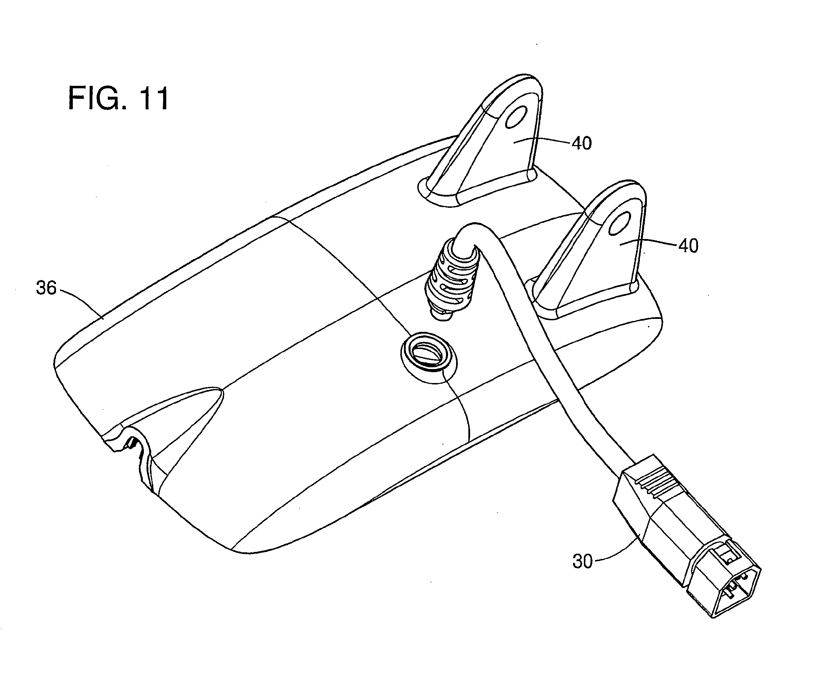

Referring to FIGS. 2-11, the transducer 20 includes a housing 24, a sonar array (in the form of a plurality of acoustic elements shown as side scan elements 26 and downward scan element 28), a cable 30 coupling the housing and acoustic elements to the electronic control head unit 22. The acoustic elements are configured for acoustic wave transmitting and receiving by a transmitter and a receiver that are operated by the electronic control head unit 22 for scanning the body of water 14, particularly for locating fish, as well as other underwater articles, and determining characteristics about the bottom 16 (see FIG. 1) of the body of water. The acoustic or sonar wave beams are transmitted based on the configuration of the acoustic elements.

The housing 24 comprises a top housing portion 36 and a bottom housing portion 38. The top housing portion 36 includes a pair of mounting members 40 extending from the front portion of the top housing portion 36. Both top housing portion 36 and bottom housing portion 38 have projections extending towards the interior of the housing to provide structural support for the housing assembly, and to provide locating and positioning support for the acoustic elements. A series of projections 42 include v-shaped recesses or notches 44 to form a cradle that receives side scan elements 26. Recesses 44 are configured (shaped and positioned) to support the rectangular shaped side scan elements 26 in a position and orientation (direction) to provide a particular, desired, predetermined acoustic beam performance.

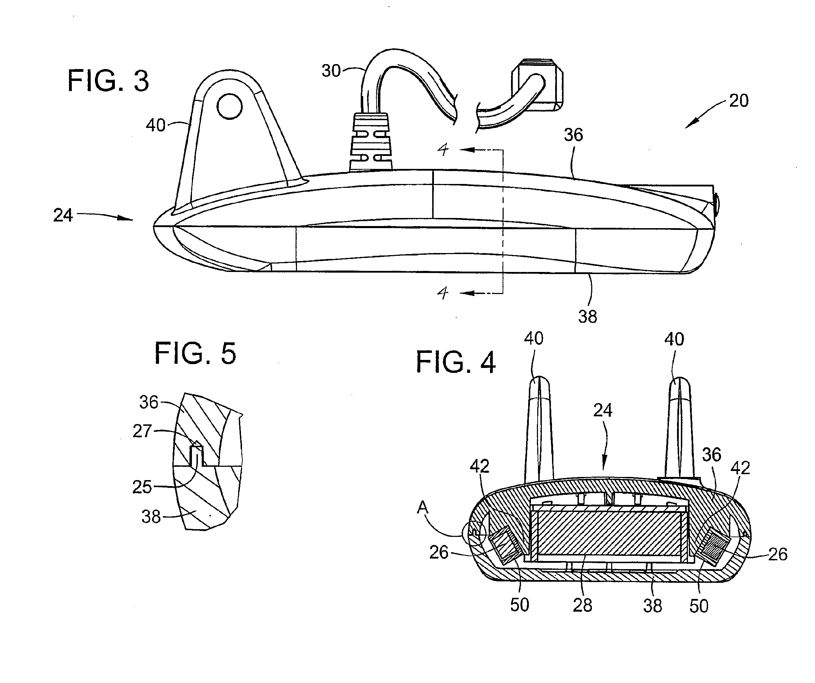

The housing 24 is coupled to the watercraft 10 by any of a variety of methods. The housing 24 is coupled to the watercraft 10 so that there are no obstructions to either side of the housing (i.e., to block the operation or affect the performance of the acoustic elements). According to a preferred embodiment, the housing 24 is coupled to the watercraft 10 along the centerline of the watercraft so that the housing 24 extends about 0.25 inches below the watercraft. According to an exemplary embodiment, mounting members 40 of the top housing 36 are coupled to a mounting bracket 46 that is coupled to a trolling motor. According to an alternative embodiment, the mounting members 40 are mounted through the hull of the watercraft 10 (e.g., with a support shaft passing through a hole in the hull). According to an alternative embodiment, the mounting members are coupled to a bracket that is coupled to a transom of the watercraft 10. Alternatively, the housing may be coupled to the watercraft at any of a variety of positions and at any of a variety of depths below the surface of the water. The top housing portion 36 may be coupled to the bottom housing portion 38 by any of a variety of conventional methods (e.g., snap fit engagement, adhesive, ultrasonic welding, fusion, heat welding, fasteners such as screws, bolts, rivets, or the like). As illustrated in FIG. 5, one embodiment of the housing 24 utilizes a mounting rib 25 that is received in a mounting channel 27 to locate the top and bottom housing portions 36, 37 together. In one embodiment, the rib 25 is welded into the channel 27 such as, e.g. via ultrasonic welding or the like.

The side scan elements 26 are located along the sides of the housing 24 and are configured to scan the water to the sides of the transducer 20 (and watercraft 10) with sonar or acoustic beams 47.

The dimensions of side scan elements 26 are configured to provide the desired sonar beam pulse 47. The size of the wave front created by the transmitted acoustic beam affects the resolution of the return echo and thus the quality of the imaging of subsurface articles displayed by the sonar device. Generally, a wide beam provides diffused return echoes that are particularly suited for indicating the presence of fish in a wide area around the watercraft. The signal displayed for fish is referred to as a "fish arch" or other indicia or icon. A narrower beam on the other hand provides a more detailed return echo or signal representative of the subsurface article. The narrow beam covers a smaller area but provides additional definition of the article. A wider beam accordingly is useful for providing indications of the presence of schools of fish in a wide area around the vessel as well as other underwater articles. The narrow beam is useful for providing details of the underwater article or the bottom.

A sonar beam becomes narrower (thereby providing better resolution) as the corresponding dimension of the acoustic element becomes larger, and a sonar beam becomes wider as the corresponding dimension of the acoustic element becomes smaller (e.g., a small height provides for a beam with a relatively wide vertical angle, and a large length provides for a beam with a relatively narrow horizontal angle). According to an exemplary embodiment, the side scan elements 26 are configured to provide a narrow horizontal beam width and a wide vertical beam width. According to a preferred embodiment, the side scan elements have a rectangular shape. According to a particularly preferred embodiment, the rectangular shaped side scan elements 26 are between about 3 inches to about 7 inches long by between about 0.125 inch and about 0.50 inch wide. According to a particularly preferred embodiment, the rectangular side scan elements 26 are about 4.5 inches long and about 0.25 inch wide. In such a particular preferred embodiment shown schematically in FIG. 1, the side scan elements 26 transmit the acoustic beam 47 with a horizontal angle 49 of about 2 degrees and a vertical angle 51 of about 50 degrees.

Referring to FIGs. 1, 4, 6, and 7, the side scan elements 26 are supported (e.g., captured, cradled, secured, etc.) by projections 42 in housing 24 so that their exposed surface 48 is orientated at a predetermined direction and angle. According to an exemplary embodiment, the side scan elements 26 are supported by the housing so that the exposed surface is orientated outward from the transducer 20 and toward the bottom of the water (e.g., downward from the watercraft 10 and surface of the water). According to a preferred embodiment, side scan elements 26 are angled downward between about 20 degrees and about 40 degrees, depending on the resonant frequencies. According to a particularly preferred embodiment, the side scan elements 26 are orientated downward at about 30 degrees for resonant frequencies of between about 260 KHz and about 462 KHz. According to alternative embodiments, the side scan elements are mounted with any of a variety of orientations and directions, depending on types of depths the transducer is intended to be used in (e.g., lake, river, ocean, etc.) and on the configuration of the transducer sonar beams (e.g., as determined by the size and dimensions of the acoustic elements). Preferably, the side scan elements 26 are coupled to the housing 24 with an epoxy. Alternatively, the side scan elements are coupled to the housing by any of a variety of adhesives or bonding or joining materials or techniques.

According to a preferred embodiment, side scan elements 26 are made from a piezoelectric ceramic. According to a particularly preferred embodiment, the side scan elements are composed of lead zirconate titanate ("PZT") commercially available from Morgan Electro Ceramics of the United Kingdom. According to alternative embodiments, the side scan elements may be made from any of a variety of piezoelectric materials capable of converting electric energy into mechanical energy and converting mechanical energy into electrical energy.

An acoustic shield 50 (e.g., shielding, decoupler, barrier, absorber, etc.) surrounds all but one side of side scan elements 26 to prevent sonar pulses from being transmitted, and sonar returns received by, acoustic elements in all but the desired direction of scanning. The acoustic shield 50 may be made from any of a variety of materials that are poor conductor of sonar energy, such as cork, foam, polymers, or other low density materials, and the like.

The downward scan element 28 is located along the bottom middle of the housing 24 and is configured to scan the water below the transducer 20 (and watercraft 10) with sonar or acoustic beams 53 (see FIG. 1). According to a preferred embodiment, downward scan element 28 comprises a pair of transducer elements coupled together. According to alternative embodiments, the downward scan element comprises a single element or more than two elements.

The dimensions of downward scan element 28 are configured to provide a desired sonar beam pulse. According to an exemplary embodiment, the downward scan element 28 is configured to provide a relatively narrow sonar beam (e.g., for desired or optimum resolution). According to a preferred embodiment, the downward scan elements 28 have a cylindrical shape. According to a particularly preferred embodiment, the cylindrical shaped downward scan elements 28 have a diameter of between about 1 inch to about 2 inches and a height of between about 0.2 inches and about 0.5 inches. According to a particularly preferred embodiment, the cylindrical downward scan element 28 has a diameter of about 1.67 inches and a height of about 0.425 inch. In such a particular preferred embodiment shown in FIG. 1, the downward scan elements 28 transmit the acoustic beam 53 with an angle 55 of about 20 degrees. According to alternative embodiments, the side scan elements and the downward scan elements may have any of a variety of dimensions, positions, and orientations based on desired performance, manufacturing, and costs.

The downward scan element 28 are supported (e.g., captured, cradled, secured, etc.) by projections 52 in housing 24 so that its exposed surface 54 is orientated at a predetermined direction and angle. According to an exemplary embodiment, the downward scan elements 28 are supported by the housing so that the exposed surface is orientated vertically downward from the transducer 20 and toward the bottom of the water. Preferably, the downward scan elements 28 are coupled to the housing 24 with an epoxy. Alternatively, the downward scan elements are coupled to the housing by any of a variety of adhesives or bonding or joining materials or techniques.

According to a preferred embodiment, the downward scan element 28 are made from a ceramic. According to a particularly preferred embodiment, the downward scan element 28 are composed of lead zirconate titanate ("PZT") commercially available from Morgan Electro Ceramics of the United Kingdom. According to alternative embodiments, the downward scan elements may be made from any of a variety of piezoelectric materials capable of converting electric energy into mechanical energy and converting mechanical energy into electrical energy.

An acoustic shield 56 (e.g., shielding, decoupler, barrier, absorber, etc.) surrounds all but one side of the downward scan elements 28 to prevent sonar pulses from being transmitted, and sonar returns received by, acoustic elements in all but the desired direction of scanning. The acoustic shield 56 may be made from any of a variety of materials that are poor conductor of sonar energy, such as cork, foam, polymers, or other low density materials, and the like.

The return sonar signal from the bottom reflection carries details about the bottom 16. The return sonar signal from the side reflection carries details about the sides and bottom 16 to the side of the watercraft 10. The sonar return data is communicated or sent to be processed by the transducer 20 to the electronic control head unit 22 for display of images or symbols representative of the received return echoes of the acoustic wave beams. The transmission of an acoustic pulse and the reception of reflected echoes is a transmit/receive cycle, which is referred to herein as a T/R cycle. The wavefront of the acoustic pulse travels from the transducer 20, to the bottom 16 of the body of water 14, and reflects back to the transducer which receives the reflected echoes of the acoustic wave beam. The duration of the T/R cycle depends on the depth of the water. Typically, the T/R cycles of transmission and reception are two to four times per second for deep water and more frequently, such as one-thirtieth of a second, for shallower waters.

According to a preferred embodiment, the transducer 20 does not include any electronics; rather the electronics are located in the electronic control head unit 22. The images include a bottom profile, objects along the bottom or in the water (e.g., fish), and the like. The display may also display informational subject matter (e.g., depth, water temperature, velocity of the watercraft 10, etc.).

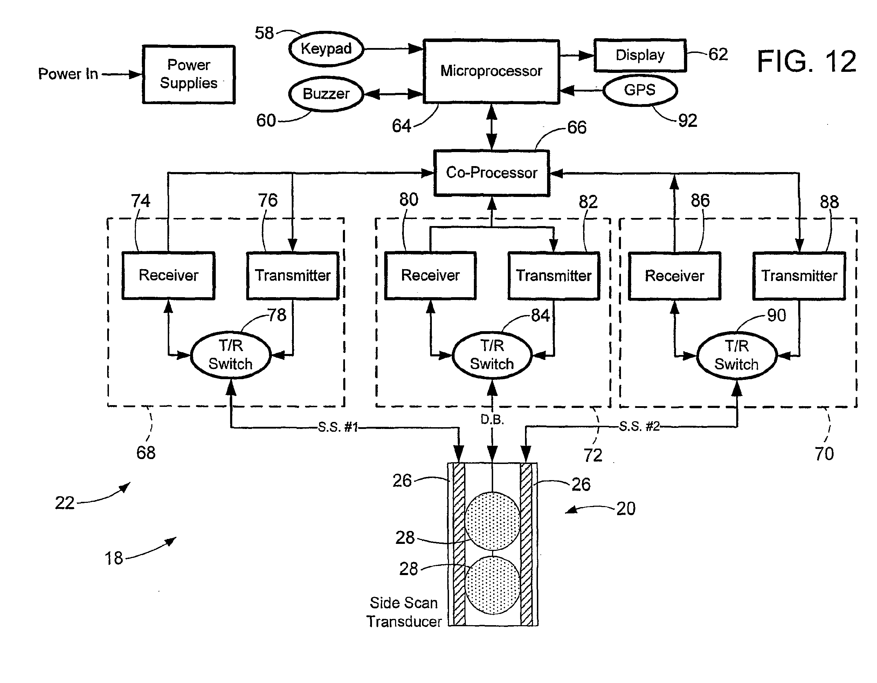

Referring to FIG. 12, the electronic control head unit 22 is coupled to a power supply and comprises a user interface (58, 60 and 62), a microprocessor 64, a co-processor 66, a first side scan circuit 68, a second side scan circuit 70, and a bottom scan circuit 72. The user interface is configured to allow for user inputs through a display menu where parameters like depth range, sensitivity, fish alarm and the like. The user interface is shown to comprise a keypad 58, buzzer 60, and display 62. Alternatively, the user interface may have switches or push buttons, or the like.

The microprocessor 64 is coupled to the user interface and is configured to process the data from the co-processor 66 (e.g., control the displayed information, format the information for display, run the operational algorithms, and the like). The microprocessor 64 can be a microcontroller, application-specific integrated circuit (ASIC) or other digital and/or analog circuitry configured to perform various input/output, control, analysis, and other functions described herein. In one embodiment, the microprocessor 64 includes a memory (e.g., non-volatile memory) configurable with software to perform the functions disclosed herein. The microprocessor 64 of the electronic control head unit 22 implements programmed algorithms (e.g., differential amplitude filtering (eliminate engine spark noise), time variable gain optimization - for best image, fish finding algorithms, antiringing pulse on transmit for better resolution, and use down beam depth to correct slant angle range information). According to a preferred embodiment, a software filter algorithm is provided to filter certain noise common to operation of watercraft (and noise caused by sparkplug in particular).

During operation of the sonar imaging system 18 in a particularly preferred embodiment, amplitude readings are taken approximately every 0.75 inches, such that 100 feet of depth has 1600 readings. The 0.75 inch amplitude readings from the last transmit / receive cycle (T/R cycle) are saved into computer memory. For each of these 0.75 inch amplitude readings, present and previous amplitude readings the software conducts the following test: Is "present reading" - "previous reading" > x. If Yes, then substitute "previous reading" for "present reading". If no, use the present reading. The microprocessor 64 also filters the signals, sorts sonar target returns from the bottom and fish, calculates display range parameters and then feeds the processed signals to the LCD display screen. The display 62 is preferably a graphic display, for example, but not limited on the pixel order. Other displays such as LED, flasher, A-scope and digital segment may alternatively be used. The electronic control head unit 22 may be powered by batteries (e.g., its own dedicated batteries, marine battery, etc.).

The co-processor 66 is coupled to the microprocessor 64 and is configured to collect, process, and pass data to the microprocessor 64 (e.g. generates the transmission frequencies, converts the analog data to digital with A/D converter and sends to the microprocessor 64). The co-processor 66 can be a microcontroller, application-specific integrated circuit (ASIC) or other digital and/or analog circuitry configured to perform the functions disclosed herein. In one embodiment, the co-processor 66 includes a memory (e.g., non-volatile memory) configurable with software to perform the functions disclosed herein.

The first side scan circuit 68 is coupled to the co-processor 66 and is configured to operate one of the side scan elements. The first side scan circuit 68 comprises a receiver 74, a transmitter 76, and a transmit/receive switch (i.e., T/R switch 78). The second side scan circuit 70 is coupled to the co-processor 66 and is configured to operate the other side scan element. The second side scan circuit 70 comprises a receiver 86, a transmitter 88, and a transmit/receive switch (i.e., T/R switch 90). The bottom scan circuit 72 is coupled to the co-processor 66 and is configured to operate the bottom scan element. The bottom scan circuit 72 comprises a receiver 80, a transmitter 82, and a transmit/receive switch (i.e., T/R switch 84).

The receivers 74, 80, 86 are configured to amplify the signal and conducts signal filtering, base banding - rectification (e.g., remove carrier frequency), and logarithmic conversions (e.g., to obtain a wide range at output) and preferably provide variable receiver bandwidth. The transmitters 76, 82, 88 are configured to drive the acoustic elements and preferably provide variable transmit power and preferably at a high voltage. The T/R switches 78, 84, 90 are configured to switch the scan circuits 68, 70, 72 between transmit and receive modes.

According to a preferred embodiment, the electronic control head unit 22 is configured to operate at one or more resonant frequencies, depending on the intended depth and desired resolution. Such a multiple-frequency operation is intended to make up for shortcomings of mounting the transducer to the watercraft 10 caused by the varying distance between the transducer to the bottom 16 of the water 14. According to a particularly preferred embodiment using a dual-resonant frequency and side scan acoustic elements that are about 4.5 by about 0.25 inch, the electronic control head unit 22 is configured to operate at 260 kHz resonant frequency (e.g., wider acoustic wave beam for deeper depth and further distances) and at 462 kHz resonant frequency (e.g., narrower acoustic wave beam for shallower depth and shorter distances). The down beam that is provided in one embodiment utilizes a 200kHz/50kHz dual beam. Other embodiments may use a quad beam or even six beam. In preferred embodiments, at least one view of the display shows both the down beam imaging and side imaging. This provides the ability to better relate length of shadow information to the size of the underwater target.

FIG. 1 shows a cross-sectional view of the body of water 14 to illustrate features of the present invention during operation of the sonar imaging system 18. With additional reference to FIG. 12, the sonar imaging system 18 transmits the acoustic wave beam 47 from the side scan elements 26 and the acoustic wave beam 53 from downward scan elements 28. The receivers 74, 80, 86 begin listening for sonar returns through the transducer 20. The acoustic wave beams 47, 53 propagate to the bottom surface 16 and reflects a sonar return. The transducer 20 communicates the received sonar return to the receivers 74, 80, 86. A prior cycle had determined the depth, and in the illustrated embodiment, the depth is displayed on the display 62 as well as provided to a controller for evaluating the duration. Using the prior determined depth, a controller determines an approximate travel time for the sound energy signal 47, 53 to reach the bottom 16 and return. At a predetermined proportion of the travel time, the return sonar reaches a point near the transducer. The return sonar from the bottom 16 reflection carries details about the bottom 16. The controller directs the switch to change the receiving mode from transmit mode to receive mode. The receivers 74, 80, 86 then use the acoustic elements for the return sonar. The sonar imaging system 18 continues receiving in the narrow acoustic wave beam mode, until the start of the next T/R cycle. The received sonar returns are processed by the controller for display of representative symbols on the display 62. The T/R cycle then repeats with the newly determined depth from the prior cycle.

The sonar images from the down beam and side scan elements are then displayed on the display 62. These images may be shown in grey-scale or in color. The location of the watercraft 10 is also shown in the image. If the user chooses to only display the down beam sonar information, historic information is typically shown to the left of the location of the watercraft. As such, the display 62 shows images to the bottom of the watercraft 10 that are even with and behind the watercraft 10 when the watercraft 10 is traveling forward. The user may also display only the side scan sonar images, only those from one side scan element, or images from both sides and the bottom. The display 62 may also be configured (or configurable) to indicate information such as depth, and speed of the watercraft 10, range, etc.

In a highly preferred embodiment, a GPS receiver 92 is also included to provide the microprocessor 64 location information. This information may be used to provide charting and other navigational functions. To provide even more accurate images, the system of the present invention provides the offset necessary to account for the X and Y distance between the side imaging transducer and the GPS antenna. In one embodiment a cursor mode allows a user to move a cursor on the display 62 over a target of interest on the screen image and set a waypoint for the location of the structure. The GPS history may be used to determine the distance back and the sonar may be used to determine the distance to the side. The GPS speed is used in one embodiment to provide the screen scroll rate to provide more accurate front to back target dimensions. Without GPS or a speed sensor a fast scroll rate and a slow boat speed will elongate targets and a slow scroll rate and a fast boat speed will shorten targets. The corners of screen captures can be marked so that large area composite mosaic images can be generated in the unit 22 or post processed later. Preferably, one view that shows both side imaging and navigation information is provided. This makes it easier to follow tracks and provide efficient area coverage.

It is important to note that the terms are intended to be broad terms and not terms of limitation. These components may be used with any of a variety of products or anangements and are not intended to be limited to use with fish finding applications. For example, mounting to a watercraft is not intended to be limiting to devices that are directly attached to the watercraft, but would include devices attached to motors (such as trolling motors) attached to the watercraft, and the like.

In addition, the transducer preferably provides dual frequency, single element side beams in the form of two opposed vertical beams optimized for range and depth and front to back beam width selected based on image resolution, fish finding and transducer length.

## Claims

1. A sonar imaging device comprising a transducer assembly (20), comprising:
a housing (24) having mounting members (40) adapted to mount the transducer assembly (20) to a watercraft (10) or a trolling motor, left and right side scan acoustic elements (26) positioned within the housing (24) to provide side scan sonar imaging and at least one downward scan acoustic element (28) positioned in the housing (24) between the left and right side scan acoustic elements (26) to provide downward scan sonar imaging, **characterized in that** the left and right side scan acoustic elements (26) are each rectangular in shape having a total length of between about 7.62 centimetres (three inches) to about 17.78 centimetres (seven inches) and a total width of between about 0.32 centimetres (0.125 inches) and about 1.27 centimetres (0.5 inches) to produce fan-shaped beams (47) having a narrow horizontal angle (49) and a wide vertical angle (51).

2. The sonar imaging device of claim 1, wherein the left and right side scan acoustic elements (26) are each positioned within the housing (24) at a depression angle of about 20 degrees to about 40 degrees.

3. The sonar imaging device of claim 2, wherein the left and right side scan acoustic elements (26) are each positioned within the housing (24) at a depression angle of about 30 degrees.

4. The sonar imaging device of claim 1, comprising a pair of downward scan acoustic elements (28) positioned in the housing (24) between the left and right side scan acoustic elements (26).

5. The sonar imaging device of claim 1, wherein the at least one downward scan acoustic element (28) has a cylindrical shape.

6. The sonar imaging device of claim 5, wherein the at least one downward scan acoustic clement (28) has a diameter of between about 2.54 centimetres (one inch) and about 5.08 centimetres (two inches) and a height of between about 0.51 centimetres (0.2 inches) and about 1.27 centimetres (0.5 inches).

7. The sonar imaging device of claim 1, wherein the at least one downward scan acoustic element (28) produces a conical beam (53) having a beam angle (55) of about 20 degrees.

8. The sonar imaging device of claim 1, wherein the left and right side scan acoustic elements (26) resonate at between about 260 kHz and about 462 kHz.

9. The sonar imaging device of claim 1, wherein the length of each side scan acoustic element (26) is about 11.43 centimetres (4.5 inches) and the width is about 0.64 centimetres (0.25 inches).

10. The sonar imaging device of claim 9, wherein the narrow horizontal angle (49) is about 2 degrees and the wide vertical angle (51) is about 50 degrees.

11. The sonar imaging device of claim 1, further comprising an acoustic shield (50) surrounding all but one face (54) of each of the left and right side scan acoustic elements (26).

12. The sonar imaging device of claim 1, wherein the transducer assembly (20) does not contain any electronics.

13. The sonar imaging device of claim 1, wherein each of the left and right side scan acoustic elements (26) are configured for both acoustic wave transmitting and receiving.

14. The sonar imaging device of claim 1, further comprising a plurality of transmitters (76, 88) and a plurality of receivers (74, 86) operatively coupled to the transducer assembly (20) via a cable (30) that respectively transmit sonar pulses to, and receive sonar return signals from, the left and right side scan acoustic elements (26); and a display (62) for displaying side scan sonar images that provide details of underwater articles and bottom.

15. The sonar imaging device of claim 14, further comprising a processor (64, 66), a GPS receiver (92) operatively coupled to the processor to provide positioning information thereto; and a memory for storing the positioning information to produce a GPS history of positioning information; wherein a cursor mode allows a user to move a cursor on the display (62) over a target of interest on a side scan sonar image and set a waypoint for the target's location, and wherein the GPS history is used to determine a distance back to the target and the side scan sonar is used to determine a distance to the side of the target.

16. The sonar imaging device of claim 14, wherein the sonar return signals received from the left and right side scan acoustic elements (26) are sent over the cable (30) to the plurality of receivers (74, 86) and then amplified by the receivers.

## Patentansprüche

1. Sonar-Bildgebungsvorrichtung, die eine Schallwandleranordnung (20) umfasst, wobei die Vorrichtung Folgendes umfasst:
ein Gehäuse (24) mit Montageelementen (40), die dazu eingerichtet sind, die Schallwandleranordnung (20) an einem Wasserfahrzeug (10) oder einem Schleppmotor zu montieren, ein linkes und ein rechtes Side-Scan-Schallelement (26), die in dem Gehäuse (24) positioniert sind, um Side-Scan-Sonar-Bildgebung bereitzustellen, und mindestens einem Downward-Scan-Schallelement (28), das in dem Gehäuse (24) positioniert ist, um Downward-Scan-Sonar-Bildgebung bereitzustellen, **dadurch gekennzeichnet, dass** das linke und das rechte Side-Scan-Schallelement (26) jeweils eine rechteckige Form mit einer Gesamtlänge zwischen etwa 7,62 Zentimeter (drei Zoll) und etwa 17,78 Zentimeter (sieben Zoll) und einer Gesamtbreite zwischen etwa 0,32 Zentimeter (0,125 Zoll) und etwa 1,27 Zentimeter (0,5 Zoll) aufweisen, um fächerförmige Strahlen (47) mit einem engen horizontalen Winkel (49) und einem weiten vertikalen Winkel (51) zu erzeugen.

2. Sonar-Bildgebungsvorrichtung nach Anspruch 1, wobei das linke und das rechte Side-Scan-Schallelement (26) jeweils in dem Gehäuse (24) in einem Tiefenwinkel von etwa 20 Grad bis etwa 40 Grad positioniert sind.

3. Sonar-Bildgebungsvorrichtung nach Anspruch 2, wobei das linke und das rechte Side-Scan-Schallelement (26) jeweils in dem Gehäuse (24) in einem Tiefenwinkel von etwa 30 Grad positioniert sind.

4. Sonar-Bildgebungsvorrichtung nach Anspruch 1, die ein Paar von Downward-Scan-Schallelementen (28) umfasst, die in dem Gehäuse (24) zwischen dem linken und dem rechten Side-Scan-Schallelement (26) positioniert sind.

5. Sonar-Bildgebungsvorrichtung nach Anspruch 1, wobei das mindestens eine Downward-Scan-Schallelement (28) eine zylindrische Form aufweist.

6. Sonar-Bildgebungsvorrichtung nach Anspruch 5, wobei das mindestens eine Downward-Scan-Schallelement (28) einen Durchmesser zwischen etwa 2,54 Zentimeter (ein Zoll) und etwa 5,08 Zentimeter (zwei Zoll) und eine Höhe zwischen etwa 0,51 Zentimeter (0,2 Zoll) und etwa 1,27 Zentimeter (0,5 Zoll) aufweist.

7. Sonar-Bildgebungsvorrichtung nach Anspruch 1, wobei das mindestens eine Downward-Scan-Schallelement (28) einen konischen Strahl (53) mit einem Strahlwinkel (55) von etwa 20 Grad erzeugt.

8. Sonar-Bildgebungsvorrichtung nach Anspruch 1, wobei das linke und das rechte Side-Scan-Schallelement (26) zwischen etwa 260 kHz und etwa 462 kHz schwingen.

9. Sonar-Bildgebungsvorrichtung nach Anspruch 1, wobei die Länge jedes Side-Scan-Schallelements (26) etwa 11,43 Zentimeter (4,5 Zoll) ist und die Breite etwa 0,64 Zentimeter (0,25 Zoll) ist.

10. Sonar-Bildgebungsvorrichtung nach Anspruch 9, wobei der enge horizontale Winkel (49) etwa 2 Grad ist und der weite vertikale Winkel (51) etwa 50 Grad ist.

11. Sonar-Bildgebungsvorrichtung nach Anspruch 1, die weiterhin eine Schallabschirmung (50) umfasst, die alle bis auf eine Fläche (54) jedes des linken und des rechten Side-Scan-Schallelements (26) umgibt.

12. Sonar-Bildgebungsvorrichtung nach Anspruch 1, wobei die Schallwandleranordnung (20) keine Elektronik enthält.

13. Sonar-Bildgebungsvorrichtung nach Anspruch 1, wobei jedes des linken und des rechten Side-Scan-Schallelements (26) für sowohl das Senden als auch das Empfangen von Schallwellen konfiguriert ist.

14. Sonar-Bildgebungsvorrichtung nach Anspruch 1, die weiterhin Folgendes umfasst:
mehrere Sender (76, 88) und mehrere Empfänger (74, 86), die mit der Schallwandleranordnung (20) mittels eines Kabels (30) wirkgekoppelt sind und die Sonarimpulse an das linke und das rechte Side-Scan-Schallelement (26) senden bzw. Sonarrücksignale von dem linken und dem rechten Side-Scan-Schallelement (26) empfangen; und eine Anzeige (62) zum Anzeigen von Side-Scan-Sonarbildern, die Einzelheiten von Unterwassergegenständen und dem Grund bereitstellen.

15. Sonar-Bildgebungsvorrichtung nach Anspruch 14, die weiterhin einen Prozessor (64, 66), einen GPS-Empfänger (92), der mit dem Prozessor wirkgekoppelt ist, um diesem Positionierungsinformationen bereitzustellen; und einen Speicher zum Speichern der Positionierungsinformationen, um einen GPS-Verlauf von Positionierungsinformationen zu erzeugen, umfasst; wobei ein Cursor-Modus einem Benutzer ermöglicht, einen Cursor auf der Anzeige (62) über ein Ziel von Interesse auf einem Side-Scan-Sonarbild zu bewegen und einen Wegpunkt für den Ort des Ziels zu setzen, und wobei der GPS-Verlauf dazu verwendet wird, eine Entfernung zurück zu dem Ziel zu bestimmen, und der Side-Scan-Sonar dazu verwendet wird, eine Entfernung zu der Seite des Ziels zu bestimmen.

16. Sonar-Bildgebungsvorrichtung nach Anspruch 14, wobei die Sonarrücksignale, die von dem linken und dem rechten Side-Scan-Schallelement (26) empfangen werden, über das Kabel (30) an die mehreren Empfänger (74, 86) gesendet und dann von den Empfängern verstärkt werden.

## Revendications

1. Dispositif d'imagerie sonar comprenant un ensemble transducteur (20), comportant :
un logement (24) possédant des éléments de montage (40) conçus pour monter l'ensemble transducteur (20) sur une embarcation (10) ou un moteur de traîne, des éléments acoustiques de balayage latéral gauche et droit (26) positionnés à l'intérieur du logement (24) afin de procurer une imagerie sonar à balayage latéral, et au moins un élément acoustique à balayage descendant (28) positionné dans le logement (24) entre les éléments acoustiques de balayage latéral gauche et droit (26) afin de procurer une imagerie sonar à balayage descendant, **caractérisé en ce que** les éléments acoustiques de balayage latéral gauche et droit (26) ont chacun une forme rectangulaire avec une longueur totale située entre 7,62 centimètres (trois pouces) environ et 17,78 centimètres (sept pouces) environ, et une largeur totale située entre 0,32 centimètre (0,125 pouce) environ et 1,27 centimètre (0,5 pouce) environ afin de produire des faisceaux en forme d'éventail (47) ayant un angle horizontal étroit (49) et un angle vertical large (51).

2. Dispositif d'imagerie sonar selon la revendication 1, chacun des éléments acoustiques de balayage latéral gauche et droit (26) étant positionné à l'intérieur du logement (24) suivant un angle de dépression de 20 degrés environ à 40 degrés environ.

3. Dispositif d'imagerie sonar selon la revendication 2, chacun des éléments acoustiques de balayage latéral gauche et droit (26) étant positionné à l'intérieur du logement (24) suivant un angle de dépression de 30 degrés environ.

4. Dispositif d'imagerie sonar selon la revendication 1, comprenant une paire d'éléments acoustiques à balayage descendant (28) laquelle est positionnée dans le logement (24) entre les éléments acoustiques de balayage latéral gauche et droit (26).

5. Dispositif d'imagerie sonar selon la revendication 1, ledit au moins un élément acoustique à balayage descendant (28) ayant une forme cylindrique.

6. Dispositif d'imagerie sonar selon la revendication 5, ledit au moins un élément acoustique à balayage descendant (28) ayant un diamètre situé entre 2,54 centimètres (un pouce) environ et 5,08 centimètres (deux pouces) environ, et une hauteur située entre 0,51 centimètre (0,2 pouce) environ et 1,27 centimètre (0,5 pouce) environ.

7. Dispositif d'imagerie sonar selon la revendication 1, ledit au moins un élément acoustique à balayage descendant (28) produisant un faisceau conique (53) avec un angle de faisceau (55) de 20 degrés environ.

8. Dispositif d'imagerie sonar selon la revendication 1, les éléments acoustiques de balayage latéral gauche et droit (26) ayant une résonance située à 260 kHz environ et 462 kHz environ.

9. Dispositif d'imagerie sonar selon la revendication 1, la longueur de chaque élément acoustique de balayage latéral (26) étant égale à 11,43 centimètres (4,5 pouces) environ et la largeur étant égale à 0,64 centimètre (0,25 pouce) environ.

10. Dispositif d'imagerie sonar selon la revendication 9, l'angle horizontal étroit (49) étant égal à 2 degrés environ et l'angle vertical large (51) étant égal à 50 degrés environ.

11. Dispositif d'imagerie sonar selon la revendication 1, comprenant en outre un écran acoustique (50) lequel entoure toutes les faces à l'exception d'une seule face (54) de chacun des éléments acoustiques de balayage latéral gauche et droit (26).

12. Dispositif d'imagerie sonar selon la revendication 1, l'ensemble transducteur (20) ne contenant aucun composant électronique.

13. Dispositif d'imagerie sonar selon la revendication 1, chacun des éléments acoustiques de balayage latéral gauche et droit (26) étant configuré pour assurer à la fois l'émission et la réception d'ondes acoustiques.

14. Dispositif d'imagerie sonar selon la revendication 14, comprenant en outre :
une pluralité d'émetteurs (76, 88) et une pluralité de récepteurs (74, 86) lesquelles sont couplées de façon opérationnelle à l'ensemble transducteur (20) via un câble (30) qui respectivement transmet des impulsions sonar aux éléments acoustiques de balayage latéral gauche et droit (26), et qui reçoit des signaux de retour de sonar en provenance de ceux-ci ; et un affichage (62) pour afficher des images de sonar à balayage latéral qui procurent des détails au sujet des articles sous l'eau et du fond.

15. Dispositif d'imagerie sonar selon la revendication 14, comprenant en outre un processeur (64, 66), un récepteur GPS (92) couplé de façon opérationnelle au processeur afin de fournir des informations de positionnement à celui-ci ; et une mémoire pour stocker les informations de positionnement afin de produire un historique GPS des informations de positionnement ; cas dans lequel un mode de curseur permet à un utilisateur de déplacer un curseur sur l'affichage (62) au-dessus d'une cible d'intérêt sur une image sonar à balayage latéral et de définir un point de cheminement pour l'emplacement de la cible, et cas dans lequel l'historique GPS est utilisé pour déterminer une distance en retour jusqu'à la cible, et le sonar à balayage latéral est utilisé pour déterminer une distance jusqu'au côté de la cible.

16. Dispositif d'imagerie sonar selon la revendication 14, les signaux de retour du sonar reçus à partir des éléments acoustiques de balayage latéral gauche et droit (26) étant envoyés par l'intermédiaire du câble (30) vers la pluralité de récepteurs (74, 86) et étant ensuite amplifiés par les récepteurs.
